# FASCICULE DE BREVET EUROPEEN

(11) **EP 4 538 513 B1**
(45) Date de publication et mention de la délivrance du brevet: **19.08.2026**
(21) Numéro de dépôt: 24202177.2
(22) Date de dépôt: 24.09.2024
(51) Int. Cl.: F02C 3/22, F02C 7/224, F02C 6/20

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 12.10.2023 FR 2310970
(43) Date de publication de la demande: 16.04.2025
(73) Titulaire: AIRBUS OPERATIONS (S.A.S.), 31060 Toulouse (FR); Airbus (S.A.S.), 31700 Blagnac (FR)
(72) Inventeur: CZAPLA, Lionel, Toulouse (FR); CARRETERO BENIGNOS, Jorge, Ottobrunn (DE); DEVASIGAMANI, Nandakumar, Toulouse (FR)
(74) Mandataire: Airbus-OPS SAS

(56) Documents cités:
- EP-A1- 4 124 738
- FR-A1- 3 127 989
- US-A- 3 237 400
- US-B1- 11 753 995

## Description

### DOMAINE TECHNIQUE

La présente invention concerne un ensemble propulsif pour un aéronef, ledit ensemble propulsif comprenant un système de propulsion comportant une tuyère d'éjection assurant l'éjection des gaz de combustion du système de propulsion et un système d'échange thermique arrangé au niveau de la tuyère d'éjection pour assurer un transfert de calories vers le dihydrogène du système de propulsion, ainsi qu'un aéronef comportant au moins un tel système de propulsion.

### ÉTAT DE LA TECHNIQUE ANTÉRIEURE

Afin de se déplacer, un aéronef comporte classiquement au moins un ensemble propulsif comprenant un système de propulsion arrangé dans une nacelle et qui peut prendre la forme d'un turboréacteur ou d'un turbopropulseur. Dans chaque cas, le système de propulsion comporte un ensemble rotatif qui entraîne une soufflante ou une hélice. L'ensemble rotatif constitue un noyau du système de propulsion et il comporte de l'avant vers l'arrière une entrée d'air qui permet l'introduction d'air dans une veine du noyau, un compresseur qui comprime l'air ainsi introduit, une chambre de combustion dans laquelle se mélange l'air ainsi comprimé et un carburant, et une turbine qui permet la détente des gaz de combustion et qui génère la rotation qui est transmise à la soufflante ou à l'hélice.

En aval de la turbine, une tuyère d'éjection assure l'éjection des gaz de combustion.

Il est également connu, notamment dans le cas du dihydrogène, que le rendement de la combustion d'un carburant est amélioré si ce carburant est chauffé avant ladite combustion. Il est également connu d'utiliser une partie des gaz de combustion chauds évacués par la tuyère d'éjection pour réchauffer le carburant.

Le document FR 3 127 989 A1 divulgue un ensemble propulsif selon l'art antérieur.

### EXPOSÉ DE L'INVENTION

Un objet de la présente invention est de proposer une autre solution pour réchauffer le dihydrogène avant sa combustion en toute sécurité.

À cet effet, est proposé un ensemble propulsif pour un aéronef comportant :
- une nacelle,
- un système de propulsion arrangé à l'intérieur de la nacelle et comprenant un carénage, un ensemble rotatif comportant une chambre de combustion et logé dans le carénage, une tuyère d'éjection disposée en aval de la chambre de combustion et délimitée par une portion arrière du carénage, dite paroi de tuyère, et assurant l'éjection des gaz de combustion issus de la combustion du dihydrogène dans la chambre de combustion,
- un réservoir de dihydrogène,
- une canalisation d'apport qui relie le réservoir et la chambre de combustion et qui est une canalisation à double peau avec une peau intérieure délimitant un volume intérieur dans laquelle circule le dihydrogène et autour une peau extérieure délimitant un volume extérieur, et
- une chambre de déviation disposée autour de la paroi de tuyère, où la paroi de tuyère est percée d'au moins un orifice amont arrangé pour permettre l'introduction des gaz chauds de combustion dans la chambre de déviation et d'au moins un orifice aval arrangé pour permettre l'extraction des gaz chauds de combustion de la chambre de déviation, et où la canalisation d'apport présente une portion de canalisation arrangée dans ladite chambre.

Avec un tel arrangement, les calories des gaz de combustion sont transférées au dihydrogène et la mise en place d'une canalisation à double peau permet d'assurer une grande sécurité même en cas de fuite.

Selon un mode de réalisation particulier, le volume extérieur contient un fluide.

Avantageusement, l'ensemble propulsif comporte une pompe qui est fluidiquement connectée au volume extérieur et qui est arrangée pour mettre en mouvement le fluide dans le volume extérieur.

Selon un mode de réalisation particulier, le volume extérieur est mis au vide.

Avantageusement, la peau extérieure est équipée d'ailettes.

Selon un mode de réalisation particulier, la portion de canalisation entoure la paroi de tuyère.

Selon un mode de réalisation particulier, la portion de canalisation s'étend autour de la paroi de tuyère sur une portion angulaire.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure. 1 est une vue de côté d'un aéronef comportant un ensemble propulsif selon l'invention,
La figure. 2 est une représentation schématique vue de côté et en coupe d'un ensemble propulsif selon l'invention, et
La figure. 3 est une représentation schématique du détail III de la figure. 2.

### EXPOSÉ DÉTAILLÉ DE MODES DE RÉALISATION

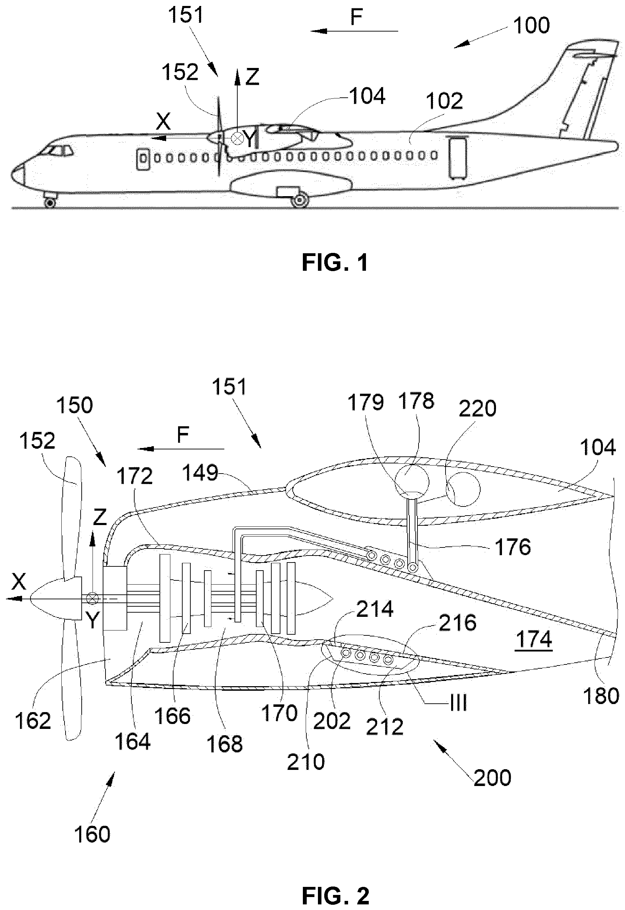

Dans la description qui suit, les termes relatifs à une position sont pris en référence à un aéronef en position d'avancement, c'est-à-dire comme il est représenté sur la figure. 1, où la flèche F montre la direction d'avancement de l'aéronef.

La figure. 1 montre un aéronef 100 qui présente un fuselage 102 de part et d'autre duquel est fixée une aile 104. Sous chaque aile 104 est fixé au moins un ensemble propulsif 151.

La figure. 2 montre l'ensemble propulsif 151 qui comprend une nacelle 149 et un système de propulsion 150 entouré par la nacelle 149. Dans le mode de réalisation de l'invention présenté ici, le système de propulsion 150 prend la forme d'un turbopropulseur avec une hélice 152 entraînée en rotation par un ensemble rotatif monté à l'intérieur d'un carénage 172 du système de propulsion 150 logé à l'intérieur de la nacelle 149, mais le système de propulsion 150 peut également prendre la forme d'un turboréacteur entraînant une soufflante. Ainsi, d'une manière générale, le système de propulsion 150 comporte un ensemble rotatif et un élément mobile 152 (hélice ou soufflante).

Dans la description qui suit, et par convention, on appelle X, l'axe longitudinal qui correspond à l'axe de rotation de l'élément mobile 152 orienté positivement dans le sens d'avancement de l'aéronef 100, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

La figure. 2 montre le système de propulsion 150 dans le cas d'un turbopropulseur. Un ensemble rotatif 160 constitue un noyau du système de propulsion 150 et comporte de l'avant vers l'arrière, une entrée d'air 162 qui permet l'introduction d'air dans une veine 164 du noyau, un compresseur 166 qui comprime l'air ainsi introduit, une chambre de combustion 168 dans laquelle l'air ainsi comprimé et du dihydrogène se mélangent et brûlent, et une turbine 170 qui permet la détente des gaz de combustion et qui génère la rotation qui est transmise à l'élément mobile, ici l'hélice 152. Les éléments de l'ensemble rotatif 160 sont entourés par le carénage 172 formé de carters structuraux montés autour des éléments de l'ensemble rotatif 160 et permettent de le rigidifier afin notamment de limiter ses distorsions en fonctionnement.

Le carénage 172 est, d'une part, ouvert à l'avant au niveau de l'entrée d'air 162 et délimite la veine 164 et est, d'autre part, ouvert à l'arrière au niveau d'une tuyère d'éjection 174 qui est en aval de la turbine 170 et donc de la chambre de combustion 168 et assure l'éjection des gaz de combustion issus de la combustion du dihydrogène et de l'air dans la chambre de combustion 168. La partie arrière du carénage 172 qui entoure la tuyère d'éjection 174 forme la paroi de tuyère 180.

L'espace entre la nacelle 149 et le carénage 172 est occupé par divers systèmes permettant d'assurer le fonctionnement du système de propulsion 150. En particulier, afin d'alimenter la chambre de combustion 168 en dihydrogène, l'ensemble propulsif 151 comporte un réservoir de dihydrogène 178 qui est ici logé dans l'aile 104, une canalisation d'apport 176 qui relie le réservoir 178 et la chambre de combustion 168 et une pompe 179 qui met en mouvement le dihydrogène du réservoir 178 jusqu'à la chambre de combustion 168 à travers la canalisation d'apport 176. Sans sortir du cadre de l'invention, le réservoir de dihydrogène 178 peut aussi être logé dans une autre partie de l'aéronef 100, par exemple dans le fuselage 102.

Afin de réchauffer le dihydrogène avant son injection dans la chambre de combustion 168, et ce pour obtenir une meilleure combustion, l'ensemble propulsif 151 comporte également un système d'échangeur thermique 200, qui est arrangé dans l'espace entre la nacelle 149 et le carénage 172, et qui est arrangé, lorsque le système de propulsion 150 est en fonctionnement, pour assurer un échange de calories entre les gaz chauds de combustion circulant dans la tuyère d'éjection 174 et le dihydrogène plus froid circulant dans la canalisation d'apport 176.

L'ensemble propulsif 151 comporte un capotage 210 qui est fixé, préférentiellement de manière étanche, à la paroi de tuyère 180 et sur l'extérieur de celle-ci, et où le capotage 210 et la paroi de tuyère 180 définissent entre eux une chambre de déviation 212 qui est ainsi disposée autour de la paroi de tuyère 180. La fixation du capotage 210 est réalisée par exemple par soudure ou rivetage le long de la périphérie du capotage 210.

La paroi de tuyère 180 est percée d'au moins un orifice amont 214 formant une entrée d'air vers la chambre de déviation 212 et d'au moins un orifice aval 216 formant une sortie d'air depuis la chambre de déviation 212 pour assurer la circulation des gaz chauds de combustion dans la chambre de déviation 212.

Chaque orifice amont 214 est arrangé pour permettre l'introduction des gaz chauds de combustion de la tuyère d'éjection 174 dans la chambre de déviation 212 et chaque orifice aval 216 est arrangé pour permettre l'extraction des gaz chauds de combustion de la chambre de déviation 212 vers la tuyère d'éjection 174.

Le ou chaque orifice amont 214 est localisé au niveau d'une partie avant du capotage 210 et le ou chaque orifice aval 216 est localisé au niveau d'une partie arrière du capotage 210.

Le système d'échangeur thermique 200 comporte une portion de canalisation 202 qui est une portion de la canalisation d'apport 176 arrangée dans ladite chambre de déviation 212 et l'échange de calories s'effectue au niveau de cette portion de canalisation 202.

La portion de canalisation 202 traverse ainsi une première fois le capotage 210 en provenant du réservoir de dihydrogène 178 pour entrer dans la chambre de déviation 212 et traverse une deuxième fois le capotage 210 pour sortir de la chambre de déviation 212 et rejoindre la chambre de combustion 168.

Ainsi, la portion de canalisation 202 est fixée dans la chambre de déviation 212 au voisinage de la paroi de tuyère 180 et le réchauffement du dihydrogène s'effectue directement dans la canalisation d'apport 176.

Les gaz chauds de combustion pénètrent ainsi dans la chambre de déviation 212 pour réchauffer le dihydrogène circulant dans la canalisation d'apport 176 avant d'arriver à la chambre de combustion 168.

En outre, pour des raisons de sécurité, il est prévu que la canalisation d'apport 176, et en particulier la portion de canalisation 202, est une canalisation à double peau avec une peau intérieure délimitant un volume intérieur dans laquelle circule le dihydrogène et une peau extérieure qui est autour de la peau intérieure et où est délimité entre la peau intérieure et la peau extérieure un volume extérieur ne contenant pas de dihydrogène en condition normale de fonctionnement, c'est-à-dire sans fuite.

Ainsi, même en cas de fuite au niveau de la peau intérieure, le dihydrogène va se répandre dans le volume extérieur en restant isolé.

Le volume extérieur peut être mis au vide ou il peut être rempli d'un fluide neutre au regard du dihydrogène, comme le diazote par exemple.

En cas de fuite au niveau de la peau extérieure, le fluide neutre va se répandre hors du volume extérieur ou le volume extérieur va se remplir de gaz chauds de combustion.

Pour prévenir une fuite de dihydrogène au niveau de la portion de canalisation 202, le système d'échangeur thermique 200 peut comporter des moyens de détection de fuite et une unité de contrôle connectée aux moyens de détection de fuite. Le système d'échangeur thermique 200 comporte également une vanne montée sur la canalisation d'apport 176 en amont de la portion de canalisation 202 par rapport au sens d'écoulement du dihydrogène et commandée en ouverture et en fermeture par l'unité de contrôle. L'unité de contrôle commande la fermeture de la vanne lorsque les moyens de détection de fuite détectent une fuite.

Les moyens de détection de fuite sont par exemple des capteurs de pression disposés dans le volume extérieur. Une fuite de la peau intérieure ou de la peau extérieure sera détectée par les capteurs de pression du fait d'un changement de la pression dans le volume extérieur : par exemple, une fuite de la peau intérieure sera détectée si la pression dans le volume extérieur est sensiblement égale à la pression de dihydrogène dans le volume intérieur et une fuite de la peau extérieure sera détectée si la pression dans le volume extérieur est sensiblement égale à la pression de l'atmosphère extérieure à la portion de canalisation 202.

Lorsque le volume extérieur est mis au vide, le volume extérieur est par exemple fluidiquement connecté à une pompe à vide.

Lorsque le volume extérieur est rempli d'un fluide, ce dernier peut être statique ou en mouvement. Lorsqu'il est statique, le fluide n'est pas en mouvement à l'intérieur du volume extérieur et dans ce cas, le volume extérieur est préférentiellement fluidiquement connecté à un vase d'expansion qui permet d'adapter la pression à la température du fluide.

Selon un autre mode de réalisation, le système d'échangeur thermique 200 comporte une pompe 220 qui est fluidiquement connectée au volume extérieur et qui est arrangée pour mettre en mouvement le fluide dans le volume extérieur.

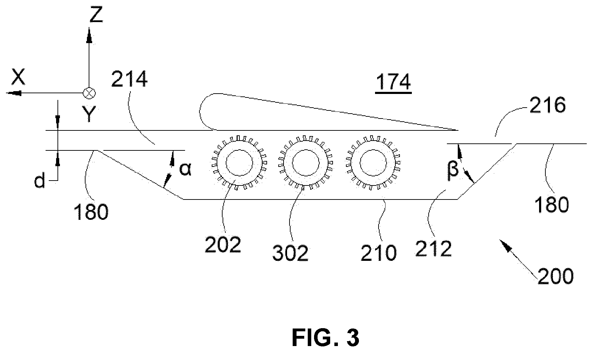

La figure. 3 montre un agrandissement de la zone III pour un mode de réalisation particulier.

La portion de canalisation 202 peut être constituée de plusieurs canaux, chacun étant à double peau, et les canaux sont alimentés par un double collecteur, où un premier collecteur alimente les différents volumes extérieurs avec du fluide et où un deuxième collecteur alimente les différents volumes intérieurs avec du dihydrogène.

Pour avoir un meilleur échange thermique entre les gaz chauds de combustion et le dihydrogène, la peau extérieure est équipée d'ailettes 302 qui sont réalisées dans un matériau à forte conductivité thermique et solidaire de la peau extérieure. Les ailettes sont plongées dans les gaz chauds de combustion.

Selon un mode de réalisation particulier, la portion de canalisation 202 entoure la paroi de tuyère 180 et elle présente ainsi au moins une spire qui fait le tour de la paroi de tuyère 180. Une telle disposition augmente le transfert de calories depuis les gaz chauds de combustion.

Selon un autre mode de réalisation particulier, la portion de canalisation 202 s'étend autour de la paroi de tuyère 180 mais uniquement sur une portion angulaire autour de l'axe longitudinal X.

Dans le mode de réalisation de l'invention présenté à la figure. 3, la paroi de tuyère 180 qui est entre l'orifice amont 214 et l'orifice aval 216 prend la forme d'un profil aérodynamique présentant au niveau de l'orifice amont 214 et en aval de celui-ci, un bord d'attaque 304 arrondi et au niveau de l'orifice aval 216, et en amont de celui-ci, un bord de fuite 306.

Pour assurer une bonne pénétration des gaz chauds de combustion par l'orifice amont 214, le bord d'attaque 304 est écarté vers l'intérieur de la tuyère d'éjection 174 par rapport à la paroi de tuyère 180 qui est en amont de l'orifice amont 214 pour laisser un passage pour les gaz chauds de combustion. La distance 'd' montre cet écart.

Au niveau de l'orifice amont 214, le capotage 210 présente un angle α de 10° à 15° par rapport à la paroi de tuyère 180 qui est en amont de l'orifice amont 214.

Au niveau de l'orifice aval 216, le capotage 210 présente un angle β de 30° à 40° par rapport à la paroi de tuyère 180 qui est en aval de l'orifice aval 216.

## Revendications

1. Ensemble propulsif (151) pour un aéronef (100) comportant :
- une nacelle (149),
- un système de propulsion (150) arrangé à l'intérieur de la nacelle (149) et comprenant un carénage (172), un ensemble rotatif (160) comportant une chambre de combustion (168) et logé dans le carénage (172), une tuyère d'éjection (174) disposée en aval de la chambre de combustion (168) et délimitée par une portion arrière du carénage (172), dite paroi de tuyère (180), et assurant l'éjection des gaz de combustion issus de la combustion du dihydrogène dans la chambre de combustion (168),
- un réservoir de dihydrogène (178),
- une canalisation d'apport (176) qui relie le réservoir (178) et la chambre de combustion (168) et qui est une canalisation à double peau avec une peau intérieure délimitant un volume intérieur dans laquelle circule le dihydrogène et autour une peau extérieure délimitant un volume extérieur, et
- une chambre de déviation (212) disposée autour de la paroi de tuyère (180), où la paroi de tuyère (180) est percée d'au moins un orifice amont (214) arrangé pour permettre l'introduction des gaz chauds de combustion dans la chambre de déviation (212) et d'au moins un orifice aval (216) arrangé pour permettre l'extraction des gaz chauds de combustion de la chambre de déviation (212), et où la canalisation d'apport (176) présente une portion de canalisation (202) arrangée dans ladite chambre de déviation (212).

2. Ensemble propulsif (151) selon la revendication 1, **caractérisé en ce que** le volume extérieur contient un fluide.

3. Ensemble propulsif (151) selon la revendication 2, **caractérisé en ce qu'**il comporte une pompe (220) qui est fluidiquement connectée au volume extérieur et qui est arrangée pour mettre en mouvement le fluide dans le volume extérieur.

4. Ensemble propulsif (151) selon la revendication 1, **caractérisé en ce que** le volume extérieur est mis au vide.

5. Ensemble propulsif (151) selon l'une des revendications 1 à 4, **caractérisé en ce que** la peau extérieure est équipée d'ailettes (202).

6. Ensemble propulsif (151) selon l'une des revendications 1 à 5, **caractérisé en ce que** la portion de canalisation (202) entoure la paroi de tuyère (180).

7. Ensemble propulsif (151) selon l'une des revendications 1 à 5, **caractérisé en ce que** la portion de canalisation (202) s'étend autour de la paroi de tuyère (180) sur une portion angulaire.

8. Aéronef (100) comportant au moins un ensemble propulsif (151) selon l'une des revendications précédentes.

## Patentansprüche

1. Antriebseinheit (151) für ein Luftfahrzeug (100), umfassend:
- eine Gondel (149),
- ein Antriebssystem (150), das im Inneren der Gondel (149) eingerichtet ist und eine Verkleidung (172), eine rotierende Einheit (160), die eine Brennkammer (168) umfasst und in der Verkleidung (172) aufgenommen ist, eine Ausstoßdüse (174), die stromab der Brennkammer (168) angeordnet ist und durch einen hinteren Abschnitt der Verkleidung (172), Düsenwand (180) genannt, begrenzt wird und das Ausstoßen der aus der Verbrennung des Wasserstoffs in der Brennkammer (168) hervorgegangenen Verbrennungsgase gewährleistet, aufweist,
- einen Wasserstofftank (178),
- eine Zufuhrleitung (176), die den Tank (178) und die Brennkammer (168) verbindet und die eine doppelhäutige Leitung ist mit einer Innenhaut, die ein Innenvolumen begrenzt, in dem der Wasserstoff zirkuliert, und darum herum einer Außenhaut, die ein Außenvolumen begrenzt, und
- eine Umlenkkammer (212), die um die Düsenwand (180) herum angeordnet ist, wobei die Düsenwand (180) mit mindestens einer stromaufwärtigen Öffnung (214) durchbohrt ist, die dazu eingerichtet ist, ist, das Einleiten der heißen Verbrennungsgase in die Umlenkkammer (212) zu ermöglichen, und mit mindestens einer stromabwärtigen Öffnung (216), die dazu eingerichtet ist, das Abziehen der heißen Verbrennungsgasen aus der Umlenkkammer (212) zu ermöglichen, und wobei die Zufuhrleitung (176) einen Leitungsabschnitt (202) aufweist, der in der Umlenkkammer (212) eingerichtet ist.

2. Antriebseinheit (151) nach Anspruch 1, **dadurch gekennzeichnet, dass** das Außenvolumen ein Fluid enthält.

3. Antriebseinheit (151) nach Anspruch 2, **dadurch gekennzeichnet, dass** sie eine Pumpe (220) umfasst, die fluidisch an das Außenvolumen angeschlossen ist und die dazu eingerichtet ist, das Fluid in dem Außenvolumen in Bewegung zu versetzen.

4. Antriebseinheit (151) nach Anspruch 1, **dadurch gekennzeichnet, dass** das Außenvolumen evakuiert ist.

5. Antriebseinheit (151) nach einem der Ansprüche 1 bis 4, **dadurch gekennzeichnet, dass** die Außenhaut mit Rippen (202) ausgestattet ist.

6. Antriebseinheit (151) nach einem der Ansprüche 1 bis 5, **dadurch gekennzeichnet, dass** der Leitungsabschnitt (202) die Düsenwand (180) umgibt.

7. Antriebseinheit (151) nach einem der Ansprüche 1 bis 5, **dadurch gekennzeichnet, dass** sich der Leitungsabschnitt (202) über einen Winkelabschnitt um die Düsenwand (180) herum erstreckt.

8. Luftfahrzeug (100), das mindestens eine Antriebseinheit (151) nach einem der vorhergehenden Ansprüche umfasst.

## Claims

1. Propulsion assembly (151) for an aircraft (100), comprising:
- a nacelle (149),
- a propulsion system (150) arranged inside the nacelle (149) and comprising a fairing (172), a rotary assembly (160) comprising a combustion chamber (168) and housed in the fairing (172), an exhaust nozzle (174) positioned downstream of the combustion chamber (168) and delimited by a rear portion of the fairing (172), referred to as nozzle wall (180), and configured to discharge the combustion gases produced by the combustion of the dihydrogen in the combustion chamber (168),
- a dihydrogen tank (178),
- a supply duct (176) which connects the tank (178) and the combustion chamber (168) and is a double-walled duct with an inner wall delimiting an inner volume in which the dihydrogen flows and, around it, an outer wall delimiting an outer volume, and
- a bypass chamber (212) positioned around the nozzle wall (180), wherein at least one upstream orifice (214), arranged to allow the introduction of the hot combustion gases into the bypass chamber (212), and at least one downstream orifice (216), arranged to allow the discharge of the hot combustion gases from the bypass chamber (212), are formed in the nozzle wall (180), and wherein the supply duct (176) has a duct portion (202) arranged in said bypass chamber (212).

2. Propulsion assembly (151) according to Claim 1, **characterized in that** the outer volume contains a fluid.

3. Propulsion assembly (151) according to Claim 2, **characterized in that** it comprises a pump (220) which is fluidically connected to the outer volume and is arranged to set the fluid in the outer volume in motion.

4. Propulsion assembly (151) according to Claim 1, **characterized in that** the outer volume is under vacuum.

5. Propulsion assembly (151) according to one of Claims 1 to 4, **characterized in that** the outer wall is equipped with fins (202).

6. Propulsion assembly (151) according to one of Claims 1 to 5, **characterized in that** the duct portion (202) surrounds the nozzle wall (180).

7. Propulsion assembly (151) according to one of Claims 1 to 5, **characterized in that** the duct portion (202) extends around the nozzle wall (180) over an angular portion.

8. Aircraft (100) having at least one propulsion assembly (151) according to one of the preceding claims.
